Europäisches Patentamt

European Patent Office

Office européen des brevets

(11) Publication number: **0 203 537 B1**

## EUROPEAN PATENT SPECIFICATION

(45) Date of publication of patent specification: **31.07.91**    (51) Int. Cl.⁵: **B29B 9/06**

(21) Application number: **86106986.2**

(22) Date of filing: **22.05.86**

(54) Granulator device.

(30) Priority: **31.05.85 IT 2099385**

(43) Date of publication of application:
**03.12.86 Bulletin 86/49**

(45) Publication of the grant of the patent:
**31.07.91 Bulletin 91/31**

(84) Designated Contracting States:
**CH DE FR GB LI SE**

(56) References cited:
DE-B- 1 263 275          GB-A- 614 800
GB-A- 1 319 997          US-A- 3 114 169
US-A- 3 323 170          US-A- 3 817 377

(73) Proprietor: **PIRELLI CAVI S.p.A.**
**Piazzale Cadorna, 5**
**I-20123 Milan(IT)**

(72) Inventor: **Marin, Carlo**
**Via Mascagni, 19**
**Vigevano (PV)(IT)**
Inventor: **Lanfranconi, Gianmario**
**Piazza Libertà, 16**
**Trezzo D'Adda (MI)(IT)**
Inventor: **Borroni, Andrea**
**Via del Tiglio, 3**
**Carimate (CO)(IT)**

(74) Representative: **Giannesi, Pier Giovanni et al**
**Pirelli S.p.A. Direzione Brevetti Piazzale**
**Cadorna, 5**
**I-20123 Milano(IT)**

## Description

The present invention refers to a granulator device and, in particular, to a device for producing granules - which are formed out of a cross-linkable plastic compound.

More specifically, the present invention refers to a device that is particularly suited for forming granules out of a cross-linkable plastic compound - intended for manufacturing cross-linkable extruded insulations - such as, for example, for cables

These type of cables are produced by forming - by means of an extruder fed with cross-linkable plastic granules, an insulation over the conductor. Successively, the extruded insulation is cross-linked.

For realizing cross-linked insulations having high dielectric rigidity, it is necessary for the insulation itself to be perfectly uniform and to be devoid of any discontinuity. This requires the granules - out of which the extruder is fed, to have uniform characteristics, and to not contain any small agglomerations or lumps - of already, partially, or totally cross-linked material.

The known granulators, for cross-linkable plastic compounds, do not differ from those used for uncross-linkable plastic compounds. Examples of granulators of this type - are those described in US-A-3114169 and US-A-3323170.

These known devices are unable to guarantee, in an absolute manner, the absence of already partially cross-linked agglomerations or lumps, in the granules, and in the mass of granules produced.

For example the known granulator for cross linkable plastic compound according to US-A-3.323.170 comprises an extruder head which is provided with a slab having a plurality of through-holes parallel to one another, distributed in an annular crown-shaped zone coaxial to the slab, an annular conduit funnelled in the direction of the slab inside which the plastic compound flows, debouching against one of the slab's side in correspondence of the annular crown zone where the through-holes are present and a rotating blade in contact with the other side of the slab for cutting the filaments, existing from the through-holes as they are gradually formed with in this way, originating the granules.

In spite of every care taken when conveying the compound of cross-linkable material toward the holes in the slab, it is impossible with the above known granulators to prevent stagnations of the compound inside the extruder-head.

In particular the plastic material running in contact with the wall of the funnelled conduit is obstaculated in it advance motion due to the friction existing between said plastic material and the surface of the wall of the funnelled conduit.

It descends that in the known granulators the plastic material runned in contact with the wall of the funnelled conduit have a time of rest inside the extrusion head of the granulator device greater than the one of the remaining part of plastic material. This results in a stagnation for the plastic material runned in contact with the wall of the funnelled conduit. The cross-linking that is commenced in these stagnations, gives rise to formation of lumps and agglomerations - of partially or completely cross-linked material, at least in the granules.

This means having disuniformities in the material of the granules produced that cause the formation of extruded cross-linked cable insulations with a discontinuous and non-uniform structure and hence, having a sure decadence in its dielectric rigidity, and therefore, giving rise to cables subject to a great probability of perforation risks during exercise.

The aim of the present invention is to realize compact granulators, for cross-linkable plastic compounds, that are devoid of the drawbacks found in the known granulators since they are capable of producing granules which are all practically made of an uncross-linked, cross-linkable material that furthermore, all have uniform characteristics.

The object of the present invention is a granulator device for cross-linkable plastic compounds comprising an extruder head which is provided with a slab having a plurality of through-holes parallel to one another, distributed in an annular crown-shaped zone coaxial to the slab an annular conduit funnelled in the direction of the slab inside which the plastic compound flows, debouching against one of the slab's sides in correspondence of the annular crown zone where the through-holes are present, and a rotating blade in contact with the other side of the slab, said device being characterized in that it contain a filter and in that at least an annular channel is provided in correspondence of the coupling zone between the annular funnelled counduit and the slab, at least a duct which is in communication with said annular channel and debouches outside the granulator device directly discharging outside this latter the plastic compound runned over the walls of the funnelled annular conduits.

The present invention will be better understood from the following detailed description, made solely be way of non limiting example, with referring to the attached drawing tables, wherein:

FIG. 1 - schematically shows a cross-sectioned lateral view of the device according to the invention;

FIG. 2 - shows a large-scale view of a cross-section of a tract of the device slab;

FIG. 3 - shows a large-scale and plane view of a tract of the slab.

FIG. 4 - shows a large-scale and perspective view of a detail of the blade of the device.

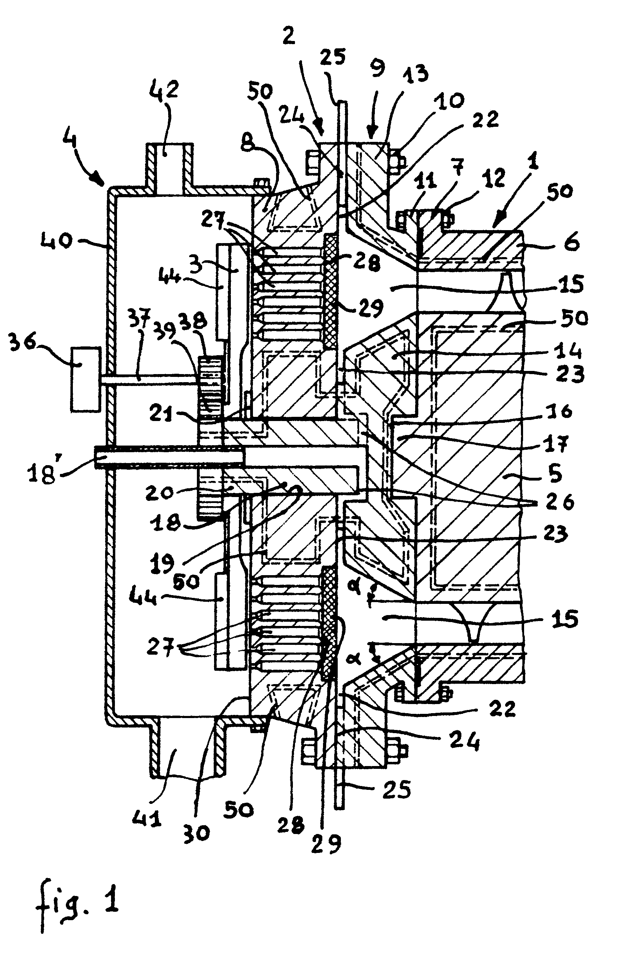

As can be seen in FIG. 1, a device according to the invention comprises an extruder 1, an extruder-head 2 - provided with a rotating blade 3 and a collecting chamber 4, for the granules produced.

The extruder 1 - is a screw-type of extruder, and it foresees a screw 5 enclosed inside a casing 6, provided with a flange 7 - for having the connection with the extruder-head 2.

The extruder-head 2 - comprises a slab 8 and a body 9 (both to be described in detail further on), that are coupled and fixed together in correspondence of their edges for example, through bolts 10.

Moreover, the body 9 possesses a flange 11 that is coupled and fixed to the flange 7 of the extruder casing 6, through bolts 12.

Said body 9 - is formed by an annular element 13 and by a disc 14. The annular element 13 that encircles and is coaxial to the disc 14, forms - with this latter, an annular conduit 15 funnelled in the direction of the slab 8. In particular, the walls of the annular funnelled conduit 15 have an angle $\alpha$ of inclination with respect to the slab axis, and this angle has a value comprised between $0°$ and $35°$.

When the inclination of the walls of the funnelled annular conduit 15 is of angle $\alpha$ over $35°$, it is had that the plastic filaments originated in the radially outermost zone of the extruder-head, have a lesser rate of formation than those originated in the radially innermost zone of the same.

Considering that the blade simultaneously cuts all the filaments which originate granules, granules having different lengths would be obtained - and hence, granules of disuniform dimensions - since the granules, formed in the radially innermost zone of the extruder-head, would have greater lengths - as compared to those originated in the radially outermost zone of the extruder-head itself.

While the annular element 13 is interposed between slab 8 and cylindrical casing 6 of the extruder, and also fixed to both, the disc 14 has, in a central position of the side turned towards the extruder screw 5, a hollow 16 wherein there is lodged a protuberance 17 cantilever from the head of the screw 5.

Moreover, the disc 14 has, on its other side, a tubular relief 18 that passes through a hole 19 made in a central position of the slab 8.

The free-end 20, of the tubular relief 18, results cantilevered from the slab 9 - and it is fixed to this latter by means of a ring-nut 21.

As previously stated, the body 9 and the slab 8 of the extruder-head, are coupled together and this coupling takes place through the contact had - between their reciprocally facing surfaces, whose characteristics are such as to originate, in the reciprocal coupling zone, at least an annular channel that communicates with the exterior of the device. Preferably, the reciprocally facing surfaces of the body 9 and the slab 8, have the characteristics described herebelow.

The surface of the body 9 that is turned towards the slab 8, presents cylindrical flarings in correspondence of both the contours of the aperture having a greater width for the annular conduit 15. Said cylindrical flarings are obtained with an annular hollow 22 made on the radially innermost edge of the annular element 13 of the body 9 and with a circular hollow 23 made on the radially outermost edge of the disc 14.

Grooves 24, departing from the hollow 22, are made on the surface of the annular element 13 that is in contact with the slab 8. The grooves 24 reach up to the edge of the annular element 13 - where they are connected to the tubes 25.

Moreover, holes 26 put into communication the annular hollow 23 of the disc 14, with the cavity of the tubular relief 18 - into which a tube 18' is inserted - that traverses the whole collecting chamber 4, this latter to be described further on. In this way, in the coupling zone of the slab 8-body 9, there are originated - a first annular channel, that communicates with the exterior of the extruder-head, in correspondence of the radially outermost edge of the funnelled annular conduit, and also a second annular channel - that communicates with the exterior, in correspondence of the radially innermost edge of the funnelled annular conduit.

The particular embodiment, described hereabove, for the first and the second annular channels - for putting the funnelled annular conduit into communication with the exterior, in correspondence of the extruder slab, must not be taken in any limitative sense.

What is of importance for the aim of the invention, is the presence - in correspondence of the slab 8, of at least one annular channel that communicates with the exterior - and preferably, of a first and a second annular channel, communicating with the outside - respectively on the radially innermost and radially outermost edges of the funnelled annular conduit and precisely, in correspondence of that portion where the conduit debouches against the slab 8. As a consequence, any whatsoever conformation of the extruder-head 2 - that allows the formation of an annular channel and preferably, of the said first and second annular channels in communication with the exterior, has to be held as being comprised within the ambit of the invention.

The slab 8 presents a plurality of through-holes 27 that are parallel to one another. Said through-holes, present in the slab 8 are disposed in such a way, as to originate therein a circular crown-shaped zone - which faces the funnelled annular conduit 15. Moreover, in correspondence of the side that faces the body 9, the slab 8 presents a circular-crown hollow 28 - that embraces the entire zone where the through-holes 27 are present.

Inside the hollow 28, there is inserted a filter 29 - for example, of a metallic netting having the form of a circular crown, with its inner and outer radii being substantially the same as those of the circular-crown in the slab - where the through-holes are present.

Moreover, all the component parts of the extruder and of the extruder-head - of the device according to the invention, are thermo-regularized - for example, through the means of having pressurized water to circulate in the conduits 50 (shown with a broken-line in FIG. 1).

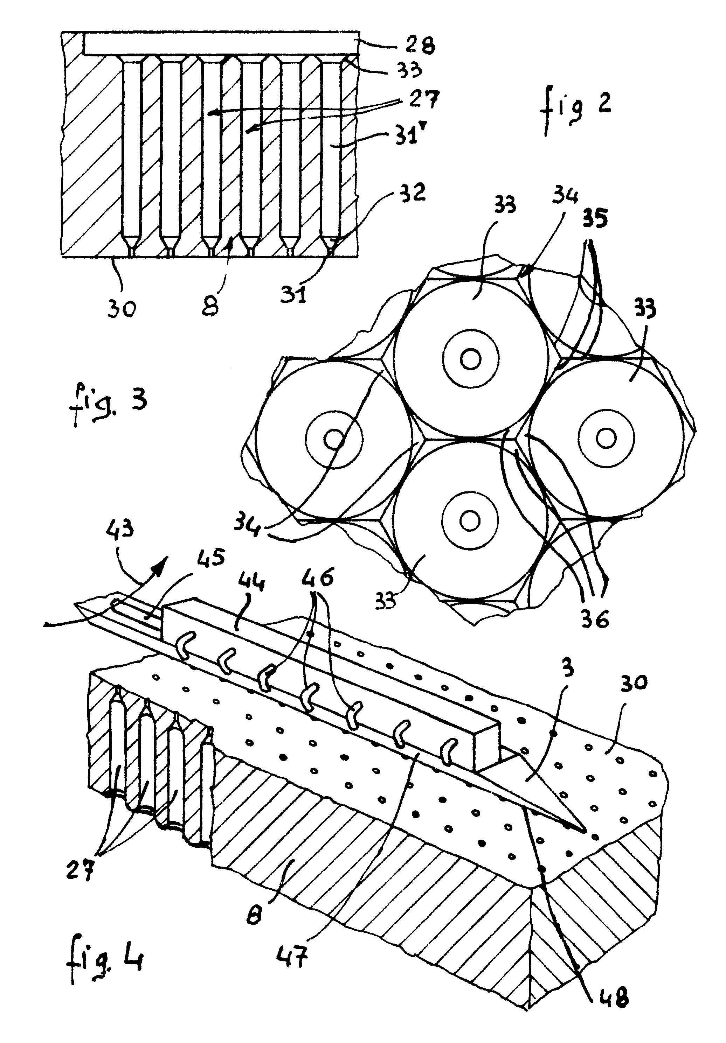

In FIGS. 2 and 3 - the details of the slab 8 are shown, in correspondence of the through-holes 27.

As is seen in FIG. 2, starting from side 30 of the slab 8 - which is the side in contact with the blade 3 (FIG. 1), the through-holes 27 have the following configuration.

Each through-hole 27 presents a cylindrical end tract 31, and an also cylindrical central-tract 31' - but of greater diametral dimensions. These two cylindrical tracts 31 and 31' are connected to each other - through a truncated-cone joining-tract 32..

The central tract 31' terminates with a flaring 33 in correspondence of the circular-crown hollow 28 present on the other side of the slab - i.e. the side against which the funnelled annular conduit 15 debouches (FIG. 1).

As can be seen in FIG. 3, the flarings 33 - of adjacent through-holes 27 are tangent to one another. Moreover, the surfaces 34 that are comprised between flarings 33, present a pyramid-form - having sharp corners 35 and curvilinear sides 36.

As previously stated and as also visible in FIGS. 1 and 4, a rotating blade 3 is connected to the extruder-head 2. The rotating blade 3 is pivoted to the extremity 20 of the tubular relief 18, and caused to rotate by a motor 36 - through a shaft 37, and by gears 38 and 39.

Moreover, the rotating blade 3 is enclosed inside a casing 40 - of a chamber 4 for collecting the produced granules that are drawn away from it pneumatically - through the aperture 41, by means of an air-flow - coming from the aperture 42, that also provides for cooling the granules.

In FIG. 4, there is shown a large-scale detail of one of said blades 3 and of a portion of the slab 8 - of the device.

As can be seen in FIG. 4, the blade - which moves in the direction of the arrow 43, overlying the slab 8, bears a compressed-air reservoir 44.

The reservoir 44 is connected - through a tube 45, to a per se known compressed-air device (not shown), that is capable of providing said air to the reservoir 44 while said reservoir moves along with blade 3.

From the reservoir 44, there issue forth nozzles 46 - which direct a flow of compressed-air against the blade surface 47 - which is the surface upstream of the latter - with respect to the direction of movement of the blade itself. In this way, the edge 48 of the blade, is kept perfectly clean - with eliminating the presence upon it, of even the minimum residues of cross-linkable material.

The functioning of the granulator - according to the invention, will now be described herebelow.

The extruder-screw 5 - that is put into rotation around its own axis by a motor (not shown in the figures), causes a cross-linkable plastic compound to advance - towards the funnelled annular conduit 15 of the extruder-head 2.

The funnelled annular conduit 15 conveys the compound towards the plurality of through-holes 27 in the slab 8.

That part of the compound which, during its passage into the funnelled annular conduit 15 runs over the walls of the conductor itself, does not pass into the through-holes 27 - but flows outside of the extruder-head - and hence, of the device, by passing through the first and the second annular channels - made in correspondence of the joining zone between slab 8 and body 9, of the extruder-head.

Instead, that part of the compound that reaches the through-holes 27, issues forth from these - in the form of cross-linkable plastic filaments.

The rotating blade 3, provides for cutting the cross-linkable plastic material filaments as they gradually forms - with thus originating granules which are collected in the chamber 4 - and from here, they are drawn away pneumatically, by means of an air-flow.

Apart from providing for the pneumatic transportation of the granules, the air-flow also causes them to cool - with thus preventing any whatsoever conglomeration of the granules themselves.

From the description given above - of a particular form of embodiment for a device according to the invention, and from the considerations that follow, it can be understood how the proposed aims are attained.

In a device, according to the invention, the presence of annular channels communicating with the exterior, that outline the circular-crown zone of the slab where the through-holes are present, prevents even the minimum stagnations of the cross-linkable plastic compound, to form inside the extruder head.

Considering the fact that these stagnations of cross-linkable plastic materials in the compound are dangerous, since at least the beginnings of cross-linking of the compound itself takes place in correspondence of them, their elimination allows for the granulator-device of the invention, to practically only produce granules which are not cross-linked - with their having a uniformity of characteristics in the component material.

Hence, for avoiding any formation of said stagnations, the presence of at least one annular channel - and preferably of two (previously mentioned) annular channels, is essential.

For assuring the complete and guaranteed achievement of these results, other elements of the device also contribute.

One of these elements is constituted by the presence of the compressed-air nozzles - which keep the blades clean, by preventing any stagnations of particles of cross-linkable material compound, from forming on the blades.

Another element, is the particular conformation of the slab 8 surface, facing the funnelled annular channel - in the zone where the through-holes are present, as was previously described with reference to FIG. 3.

In fact, the presence of the flarings, and the fact that the slab surface comprised between flarings and adjacent through holes, has the shape of a pyramidal surface - provided with sharp corners and curvilinear sides, eliminates every minimum possibility of stagnations of the plastic material occurring when the compound passes through the extruder-head.

Thus, every risk is eliminated of alterations taking place through an incipient vulcanization of the compound itself - and hence, the maximum uniformity is assured, in the material of the produced granules.

Finally, the presence of the filter in a housing of the slab itself, in contact with the slab zone wherein the through-holes are present, allows for the device, according to the invention, to have a maximum compactness.

Although a particular form of realization, according to the invention, has been illustrated and described, what is intended as also being comprised within its ambit, are all those alternative embodiments - which are accessible to the one skilled in the art.

## Claims

1. Granulator device for cross-linkable plastic compounds comprising an extruder head (2) which is provided with a slab (8) having a plurality of through-holes (27) parallel to one another, distributed in an annular crown-shaped zone coaxial to the slab (8) an annular conduit (15) funnelled in the direction of the slab (8) inside which the plastic compound flows, debouching against one of the slab's sides in correspondence of the annular crown zone where the through-holes (27) are present, and a rotating blade (3) in contact with the other side of the slab (8), said device being characterized in that it contain a filter (29) and in that at least an annular channel (22, 23) is provided in correspondence of the coupling zone between the annular funnelled counduit (15) and the slab (8), at least a duct (25, 18') which is in communication with said annular channel (22, 23) and debouches outside the granulator device directly discharging outside this latter the plastic compound runned over the walls of the funnelled annular conduit (15).

2. Granulator device, according to claim 1, characterized in that the annular channel (22, 23), comprises a first annular channel (22) in the radially outermost edge of the funnelled annular conduit (15) in correspondence of the slab (8), and a second annular channel (23) - this also in correspondence of the slab (8), in the radially innermost edge of the funnelled annular counduit (15), the said first annular channel (22) communicating with the exterior of the device through a duct 25 and the said second annular channel communicating with the exterior of the device through another duct (18').

3. Granulator device, according to claim 1, characterized in that on the side of the slab (8) against which the annular funnelled conduit (15) debouches, the surface comprised between adjacent through-holes (27), is a pyramidal-surface having sharp corners (35) and curvilinear sides (36).

4. Granulator device, according to claim 1, characterized by the fact that the walls of the funnelled annular conduit (15), have an angle of inclination that is comprised between 0° and 35°, with respect to the axis of the slab (8).

5. Granulator device, according to claim 1, characterized by the fact that the filter (29) is a filter having the form of a circular crown, with its inner and outer radii being substantially equal to those in the circular-crown zone of the slab (8) - where the through-holes (27) are present, and that this filter (29) is inserted into a complementarily shaped hollow (28), made in the slab's side, against which the funnel led annular conduit (15) debousches.

## Revendications

1. Un dispositif de granulation pour des composés plastiques réticulables comprenant une tête extrudeuse (2) qui comporte une plaque (8) présentant plusieurs trous traversants (27) parallèles entre eux, répartis en une zone annulaire en forme de couronne, coaxiale à la plaque (8), un conduit annulaire (15) en entonnoir dans la direction de la plaque (8) à l'intérieur duquel s'écoule le composé plastique, débouchant contre l'un des côtés de la plaque en correspondance avec la zone de couronne annulaire où sont ménagés les trous traversants (27), et une lame rotative (3) en contact avec l'autre côté de la plaque (8), ledit dispositif étant caractérisé en ce qu'il contient un filtre (29) et en ce qu'au moins un canal annulaire (22, 23) est ménagé en correspondance avec la zone d'accouplement entre le conduit annulaire en entonnoir (15) et la plaque (18), au moins un conduit (25, 18') qui est en communication avec ledit canal annulaire (22, 23) et débouche à l'extérieur du dispositif de granulation en déchargeant directement en dehors de ce dernier le composé plastique qui est venu en contact avec les parois du conduit annulaire en entonnoir (15).

2. Dispositif de granulation selon la revendication 1, caractérisé en ce que le canal annulaire (22, 23) comprend un premier canal annulaire (22) dans le bord radialement extérieur du conduit annulaire en entonnoir (15) en correspondance avec la plaque (8), et un deuxième canal annulaire (23) - celui-ci étant aussi en correspondance avec la plaque (8), dans le bord radialement intérieur du conduit annulaire en entonnoir (15), ledit premier canal annulaire (22) communiquant avec l'extérieur du dispositif par un conduit (25) et ledit deuxième canal annulaire communiquant avec l'extérieur du dispositif par un autre conduit (18').

3. Dispositif de granulation selon la revendication 1, caractérisé en ce que, sur le côté de la plaque (8) contre lequel débouche le conduit annulaire en entonnoir (15), la surface comprise entre des trous traversants adjacents (27) est une surface pyramidale présentant des coins aigus (35) et des côtés curvilignes (36).

4. Dispositif de granulation selon la revendication 1, caractérisé en ce que les parois du conduit annulaire en entonnoir (15) sont inclinées d'un angle compris entre 0° et 35° par rapport à l'axe de la plaque (8).

5. Dispositif de granulation selon la revendication 1, caractérisé en ce que le filtre (29) a une forme de couronne circulaire, dont les rayons intérieur et extérieur sont sensiblement égaux à ceux de la zone de couronne annulaire de la plaque (8) où sont ménagés les trous traversants (27), et en ce que ce filtre (29) est inséré dans un creux (28) de forme complémentaire, ménagé dans le côté de la plaque contre lequel débouche le conduit annulaire en entonnoir (15).

## Patentansprüche

1. Granuliervorrichtung für vernetzbare Kunststoffmassen, umfassend einen Extrudierkopf (2), der mit einer Platte (8) versehen ist, welche eine Mehrzahl von parallel zueinander verlaufenden Durchgangslöchern (27) hat, die in einer ringförmigen und kronenförmigen Zone gleichachsig zu der Platte (8) verteilt sind, eine ringförmige Leitung (15), die in Richtung der Platte (8) trichterförmig ausgebildet ist und in der die Kunststoffmasse fließt, wobei diese Leitung an einer der Seiten der Platte im Bereich der ringförmigen Kronenzone mündet, wodie Durchgangslöcher (27) vorhanden sind, und eine Drehklinge (3), die sich mit der anderen Seite der Platte (8) in Berührung befindet, **dadurch gekennzeichnet,** daß die Vorrichtung einen Filter (29) enthält, und daß wenigstens ein ringförmiger Kanal (22,23) im Bereich des Zone des Kopplung zwischen der ringförmigen und trichterförmigen Leitung (15) und der Platte (8) vorgesehen ist und wenigstens ein Kanal (25,18') vorgesehen ist, der sich mit dem ringförmigen Kanal (22,23) in Verbindung befindet und an der Außenseite der Granuliervorrichtung mündet und diejenige Kunststoffmasse direkt zur Außenseite abgibt, die über die Wände der trichterförmigen ringförmigen Leitung (15) geflossen ist.

2. Granuliervorrichtung nach Anspruch 1, dadurch gekennzeichnet, daß der ringförmige Kanal (22,23) einen ersten ringförmigen Kanal (22) in der radial äußeren Kante der trichterförmigen und ringförmigen Leitung (15) im Bereich der Platte (8), und einen zweiten Kanal (23) umfaßt, der ebenfalls im Bereich der Platte (8) in der radial inneren Kante der trichterförmigen und ringförmigen Leitung (15) vorgesehen ist, wobei der erste ringförmige Kanal (22) mit der Außenseite der Vorrichtung über einen Durchgang (25) in Verbindung steht, und der zweite ringförmige Kanal mit der Außenseite der Vorrichtung über einen anderen Durchgang (18') in Verbindung steht.

3. Granuliervorrichtung nach Anspruch 1, dadurch gekennzeichnet, daß auf der Seite der Platte (8), gegen welche die ringförmige und trichterförmige Leitung (15) mündet, die Fläche zwischen benachbarten Durchgangslöchern (27) eine pyramidenförmige Fläche ist, welche scharfe Ecken bzw. Eckkanten (35) und gekrümmte Seite (36) hat.

4. Granuliervorrichtung nach Anspruch 1, dadurch gekennzeichnet, daß die Wände der trichterförmigen und ringförmigen Leitung (15) mit Bezug auf die Achse der Platte (8) einen Neigungswinkel haben, der zwischen $0°$ und $35°$ liegt.

5. Granuliervorrichtung nach Anspruch 1, dadurch gekennzeichnet, daß der Filter (29) ein Filter ist, der die Form einer kreisförmigen Krone bzw. Ringes hat, deren bzw. dessen innerer Radius und äußerer Radius den betreffenden Radien in der kreisförmigen Kronenzone der Platte (8), dort, wo die Durchgangslöcher (27) vorhanden sind, im wesentlichen gleich sind, und daß der Filter (29) in einen komplementär gestalteten Hohlraum (28) eingesetzt ist, der in der Seite der Platte gebildet ist, gegen welche die trichterförmige und ringförmige Leitung (15) mündet.

fig. 1

EP 0 203 537 B1

fig 2

fig. 3

fig. 4

28
33
27
31'
32
33
30
8
31

33    34    35

33

34

33

36

43
45    44    46

3    30

27

8

47

48

9